# EUROPÄISCHE PATENTANMELDUNG

(11) **EP 0 622 934 A1**
(43) Veröffentlichungstag der Anmeldung: **02.11.1994**
(21) Anmeldenummer: 94106441.2
(22) Anmeldetag: 25.04.1994
(51) Int. Cl.: H04M 1/66

(54) **Vorrichtung für die akustische Anrufidentifizierung bei Telefonapparaten**

(30) Priorität: 27.04.1993 DE 4313848
(71) Anmelder: Assmann Informatik 2000 GmbH, D-61352 Bad Homburg (DE)
(72) Erfinder: Wölflick, Franz Dipl.-Ing., D-61352 Bad Homburg (DE); Himsl, Georg, D-81241 München (DE)
(74) Vertreter: Zeitler & Dickel

(57) **Zusammenfassung**

Eine Vorrichtung für die akustische Anruferkennung bei Telefonapparaten weist eine mikroprozessorgesteuerte elektronische Einrichtung auf, die eine Rufempfängerschaltung (1), eine Halteschaltung (3) und einen Sprachspeicher (4) enthält. Bei einem ankommenden Ruf wird ein im Sprachspeicher (4) gespeicherter Identifikationsaufforderungstext automatisch dem Anrufer mitgeteilt und die Telefonverbindung für eine vorbestimmte Zeitdauer aufrechterhalten. Mit Hilfe einer Lautsprecherschaltung (6, 7) zur Zuschaltung eines Lautsprechers (7) nach Beendigung der Durchsage des Identifikationsaufforderungstextes ist es für den Angerufenen möglich, den Anrufer zu identifizieren, ohne selbst mit dem Anrufer in Telefonverbindung treten zu müssen.

## Beschreibung

Die Erfindung betrifft eine Vorrichtung für die akustische Anruferkennung bei Telefonapparaten.

Beim Telefonieren besteht häufig das Problem, daß der Angerufene erst wissen möchte, wer der Anrufer ist, um entscheiden zu können, ob er den Anruf entgegennehmen möchte oder nicht.

Eine Identifikation des Anrufers vor Übernahme des Gesprächs durch den Angerufenen ist mit herkömmlichen Telefonapparaten jedoch nicht möglich, da nach dem Abnehmen des Hörers bzw. nach anderweitiger Annahme des Anrufs, beispielsweise mittels Drücken eines Knopfes oder dgl., die Telefonverbindung automatisch in beiden Richtungen geschaltet ist, d.h. nicht nur vom Anrufer zum Angerufenen, sondern auch umgekehrt. Mit Hilfe herkömmlicher Telefonapparate ist es somit nicht möglich, die Entscheidung über die Annahme eines Telefongesprächs erst nach der Identifikation des Anrufers zu treffen.

Bei einer bekannten Vorrichtung zur automatischen Gesprächsannahme bei Telefonapparaten erfolgt bei besetztem Anschluß eine einmalige oder wiederholte automatische Durchsage eines gespeicherten Textes, beispielsweise "Bitte warten ... bitte warten ..." . Diese bekannte Vorrichtung ermöglicht jedoch ebenfalls nicht die Identifikation des Anrufers vor Übernahme des Gesprächs.

Weiterhin sind Vorrichtungen zur automatischen Gesprächsannahme in Form von Anrufbeantwortern bekannt. Mit Hilfe derartiger Anrufbeantworter ist es möglich, dem Anrufer einen gespeicherten Text mitzuteilen und gegebenenfalls anschließend den vom Anrufer gesprochenen Text auf einem mitlaufenden Magnetband aufzunehmen. Während der Gesprächsaufzeichnung kann dabei der ankommende Anruf über einen Zusatzlautsprecher mitgehört werden (De 33 04 460 A1).

Nachteilig ist hierbei jedoch, daß Anrufbeantworter relativ kompliziert, kostspielig und platzintensiv sind. Weiterhin gestatten Anrufbeantworter die Identifikation des Anrufers nur bei laufendem Aufzeichnungsgerät, und es ist nicht möglich, die Aufzeichnung des ankommenden Anrufs erst nach der Identifikation des Anrufers zu starten.

Der Erfindung liegt daher die Aufgabe zugrunde, eine Vorrichtung zu schaffen, die einfach und kostengünstig aufgebaut ist, eine geringe Baugröße aufweist und die eine akustische Identifikation des Anrufers ermöglicht, bevor das Gespräch von der angerufenen Person übernommen wird.

Diese Aufgabe wird erfindungsgemäß durch die Merkmale des Anspruchs 1 gelöst. Vorteilhafte Ausgestaltungen hiervon sind in den Unteransprüchen beschrieben.

Die erfindungsgemäße Vorrichtung für die akustische Anruferkennung zur Zwischenschaltung zwischen Telefonapparat und Teilnehmeranschlußleitung ist versehen
- mit einer Steuerschaltung für die automatische Ablaufsteuerung sämtlicher Funktionen,
- einer Rufempfängerschaltung zur Erkennung eines ankommenden Rufsignals,
- einer bei einem Anruf aktivierbaren Melde- und Halteschaltung zur Aufrechterhaltung der Telefonverbindung für eine vorbestimmte erste Zeitdauer,
- einem Sprachspeicher, der aus einer eine Kurzinformation enthaltenden reinen Ansageeinrichtung besteht und während der ersten Zeitdauer über eine Sprachausgabe die Kurzinformation auf die Teilnehmeranschlußleitung ausgibt,
- einer Mithörschaltung, die einen Verstärker sowie einen Lautsprecher aufweist und während einer vorbestimmten zweiten Zeitdauer an die Teilnehmeranschlußleitung geschaltet ist,
- und einer Schleifenstromerkennungs-Schaltung. Letztere schaltet bei Annahme des Anrufs, z.B. beim Abnehmen des Telefonhörers, während der zweiten Zeitdauer die Teilnehmeranschlußleitung zum Telefonapparat durch und schaltet die Vorrichtung ab. Demgegenüber wird bei Nichtannahme des Anrufs die Melde- und Halteschaltung nach der zweiten Zeitdauer durch die Steuerschaltung deaktiviert.

Die erfindungsgemäße Lösung umfaßt somit eine elektronische Steuerschaltung, insbesondere einen Mikroprozessor (CPU), mit einer hierdurch aktivierbaren Mithörschaltung zur Zuschaltung eines Lautsprechers nach Beendigung der Durchsage des Identifikationsaufforderungstextes, um dem Angerufenen das Mithören des Anrufes nach der Identifikationsaufforderung zu ermöglichen. Hierbei ist es möglich, daß der Angerufene den Anruf, insbesondere durch Abheben des Telefonhörers, während dieser Zeitdauer entgegennimmt. Bei nicht entgegengenommenem Anruf nach Ablauf der vorbestimmten zweiten Zeitdauer ist die Halteschaltung deaktivierbar, wodurch die Gesprächsverbindung zweiseitig unterbrochen ist. Alternativ hierzu ist es auch möglich, nach Ablauf der vorbestimmten zweiten Zeitdauer einen Anrufbeantworter zuzuschalten. Wird der Anruf vom Angerufenen jedoch entgegengenommen, so bleibt die Gesprächsverbindung zweiseitig aufrechterhalten.

Mit Hilfe der erfindungsgemäßen Vorrichtung kann somit folgender Ablauf realisiert werden: Bei einem ankommenden Anruf erfolgt in jedem Fall eine automatische Gesprächsannahme, verbunden mit einer automatischen Aufforderung an den Anrufer, sich zu identifizieren. Dies kann beispielsweise durch den Text "Automatischer Anrufservice; bitte nennen Sie Ihren Namen" geschehen. Anschließend schaltet die erfindungsgemäße Vorrichtung für eine vorbestimmte zweite Zeitdauer, beispielsweise 15 Sekunden, in eine Warteposition, während welcher der Anrufer die Möglichkeit zur Identifikation erhält. Während dieser Zeitdauer kann der vom Anrufer gesprochene Text mitgehört werden, so daß der Angerufene entscheiden kann, ob er das Gespräch übernehmen möchte oder nicht. Bis zur Übernahme des Gesprächs ist der Telefonapparat des Angerufenen durch die erfindungsgemäße Vorrichtung lediglich auf Empfang geschaltet.

Das Gespräch kann vom Angerufenen übernommen werden, indem der Telefonhörer abgenommen bzw. ein entsprechender Schalter für die Freisprecheinrichtung betätigt wird. Entscheidet sich der Angerufene jedoch, das Gespräch nicht zu übernehmen, so kann die erfindungsgemäße Vorrichtung nach Ablauf der vorbestimmten zweiten Zeitdauer von beispielsweise 15 Sekunden die automatische Durchsage eines zweiten gespeicherten Textes bewirken, beispielsweise in der Form von "Ihr Anruf kann leider nicht entgegengenommen werden", und trennt die Telefonverbindung.

Die erfindungsgemäße Vorrichtung bietet den besonderen Vorteil, daß eine Identifikation des Anrufers möglich ist, ohne daß ein Aufzeichnungsgerät mitlaufen muß.

Die erfindungsgemäße Vorrichtung kann somit einfach und kostengünstig hergestellt werden und weist wesentlich geringere Abmessungen als ein Anrufbeantworter auf.

Bei einem Telefon mit Lauthör- oder Freisprecheinrichtung wird das ankommende Gespräch vorteilhafterweise auf einen Außenlautsprecher des Telefons geschaltet. Entscheidet sich der Angerufene, das Gespräch zu übernehmen, betätigt er einen vom Hörerauflegeschalter getrennten Schalter, beispielsweise eine hierfür speziell vorgesehene Drucktaste im Tastenblock des Telefons, wodurch die normale Sprechverbindung zum Anrufer hergestellt wird.

Werden Telefone bereits bei ihrer Herstellung mit der erfindungsgemäßen Vorrichtung ausgestattet, ist es vorteilhaft, wenn letztere innerhalb des Telefongehäuses angeordnet ist.

Bestehende Telefonanlagen können auch jederzeit nachträglicher mit der erfindungsgemäßen Vorrichtung ausgestattet werden, wobei in diesem Fall die Vorrichtung in einem vom Telefongehäuse getrennten Gehäuse untergebracht und mit dem Telefon über ein elektrisches Anschlußkabel oder über eine Steckverbindung verbunden werden kann, falls die Unterbringung innerhalb des Telefongehäuses nicht oder nur mit Schwierigkeiten möglich sein sollte.

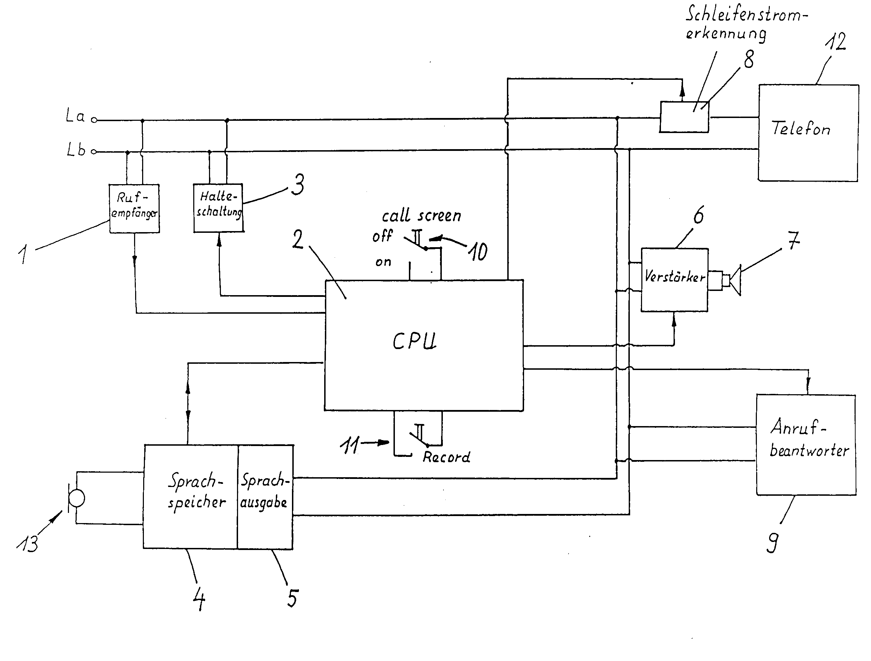

Die Erfindung wird im folgenden in Form eines Ausführungsbeispiels anhand der einzigen Zeichnung näher erläutert. Diese zeigt ein Blockschaltbild der erfindungsgemäßen Vorrichtung.

Mit einer Teilnehmeranschlußleitung La, Lb ist eine Rufempfängerschaltung 1 verbunden, deren Ausgangsseite an eine als Mikroprozessor ausgebildete Steuerschaltung 2 (CPU) angeschlossen ist. Die Rufempfängerschaltung 1 erkennt den ankommenden Ruf, d.h. die dazugehörige Rufwechselspannung, und leitet in diesem Fall der CPU 2 ein logisches Signal zu. Die CPU 2 aktiviert daraufhin für eine vorbestimmte erste Zeitdauer eine Melde- und Halteschaltung 3, die wiederum mit der Teilnehmeranschlußleitung La, Lb verbunden ist, so daß eine geschlossene Schleife "Telefonleitung-Rufempfänger-CPU-Halteschaltung-Telefonleitung" gebildet ist. Bei der Halteschaltung 3 handelt es sich um einen Lastwiderstand zwischen La und Lb. Die Wirkung der Halteschaltung 3 ist die gleiche, wie wenn jemand den Telefonhörer abhebt.

Im Anschluß daran aktiviert die CPU 2 einen Sprachspeicher 4, der beispielsweise aus einem Kassettenlaufwerk, einem digitalen Speicher od. dgl. bestehen kann und als reine Ansageeinrichtung ausgebildet ist. Mit dem Sprachspeicher 4 ist eine Sprachausgabe 5 gekoppelt, über die ein Identifikationsaufforderungstext, beispielsweise der Text "Bitte nennen Sie Ihren Namen", an die Telefonleitung La, Lb weitergegeben wird.

Nachdem der Identifikationsaufforderungstext abgelaufen ist, aktiviert die CPU 2 einen Verstärker 6, der ebenfalls mit der Telefonleitung La, Lb verbunden ist, und gibt das Signal, das an der Telefonleitung La, Lb anliegt, zu einem mit dem Verstärker 6 gekoppelten Lautsprecher 7. Der Verstärker 6 kann einen nicht dargestellten Lautstärkeregler zum Einstellen der Lautstärke aufweisen. Insgesamt ist somit durch den Verstärker 6 und den Lautsprecher 7 eine Mithörschaltung gebildet.

Die CPU 2 schaltet daraufhin während einer vorbestimmten zweiten Zeitdauer in einen Wartezustand von ca. 15 Sekunden, innerhalb denen sich der Anrufer identifizieren kann. Während dieser zweiten Zeitdauer kann der vom Anrufer gesprochene Text über den Lautsprecher 7 mitgehört werden, so daß der Angerufene entscheiden kann, ob er das Gespräch übernehmen möchte oder nicht.

Im folgenden werden drei Möglichkeiten erläutert, wie mit dem Anruf weiter verfahren werden kann:
1) Die erste Möglichkeit besteht darin, daß sich der Angerufene entscheidet, den Anruf nicht entgegenzunehmen. In diesem Fall sendet die CPU 2 nach Ablauf der für die Identifikation des Anrufers vorgesehenen zweiten Zeitkonstante, z.B. 15 Sekunden, ein Signal an die Halteschaltung 3, wodurch diese deaktiviert wird. Hierdurch wird die Schleife "Telefonleitung-Rufempfänger-CPU-Halteschaltung-Telefonleitung" und damit die Telefonverbindung getrennt. Es ist auch möglich, vor dem Trennen der Telefonverbindung automatisch einen weiteren Text vom Sprachspeicher 4 an die Telefonleitung La, Lb weiterzugeben, beispielsweise den Text: "Ihr Anruf kann leider nicht entgegengenommen werden".
2) Die zweite Möglichkeit besteht darin, daß sich der Angerufene entscheidet, das Gespräch entgegenzunehmen. In diesem Fall nimmt der Angerufene während der für die Identifikation des Anrufers vorgesehenen zweiten Zeitkonstante, z.B. 15 Sekunden, den Telefonhörer des mit der Telefonleitung La, Lb gekoppelten Telefons 12 ab, wodurch eine Schleife geschlossen wird. Das Abheben des Telefonhörers wird von einer in der Telefonleitung La liegenden Schaltung "Schleifenstromerkennung" 8 erkannt, die daraufhin ein entsprechendes Signal an die CPU 2 abgibt. Die CPU 2 sorgt infolge des von der Schleifenstromerkennung 8 abgegebenen Signals im folgenden dafür, daß die Halteschaltung 3 ausgeschaltet wird, da die Gesprächsverbindung über das Telefon 12 aufrechterhalten wird. In diesem Zustand können die Gesprächsteilnehmer in üblicher Weise so lange miteinander telefonieren, bis das Gespräch durch Auflegen eines Telefonhörers beendet wird.
3) Die dritte Möglichkeit besteht darin, daß das ankommende Gespräch mittels eines mit der Telefonleitung La, Lb und der CPU 2 gekoppelten Anrufbeantworters 9 entgegengenommen wird. Der Anrufbeantworter 9 wird aktiviert, wenn innerhalb der für die Identifikation des Anrufers vorgesehenen zweiten Zeitkonstante von beispielsweise 15 Sekunden kein Telefonhörer abgenommen wird. In diesem Fall gibt die CPU 2 dem Anrufbeantworter 9 nach Ablauf dieser Zeitkonstante das Befehlssignal, sich einzuschalten. Nach dem Einschalten des Anrufbeantworters 9 schaltet sich die Halteschaltung 3 wieder ab, und der Anrufbeantworter 9 gibt dann den üblichen Gesprächsaufforderungstext ab. Daraufhin erhält der Anrufer die Möglichkeit, auf den Anrufbeantworter 9 zu sprechen. Es ist jedoch ebenfalls möglich, aufgrund der dem Telefon vorgeschalteten Schleifenstromerkennung 8 auch nach Aktivierung des Anrufbeantworters 9 das Gespräch durch Abnahme des Telefonhörers entgegenzunehmen.

Wie aus der Zeichnung ersichtlich, ist die CPU 2 weiterhin mit einem Schalter "call screen" 10 versehen, mit dessen Hilfe die beschriebene Anruferkennungsvorrichtung vom Benutzer auf einfache Weise ein- und ausgeschaltet werden kann. Bei ausgeschalteter Anruferkennungsvorrichtung funktioniert das Telefon 12 wie ein herkömmliches Telefon.

Weiterhin ist die CPU 2 mit einem Schalter "Record" 11 versehen, der durch Drücken einer am Telefon 12 angebrachten Taste geöffnet oder geschlossen werden kann. Der Schalter "Record" 11 dient zum Aufnehmen des Identifikationsaufforderungstextes in den Sprachspeicher 4. Ist der Schalter "Record" 11 beispielsweise durch Drücken und Festhalten der dazugehörigen Taste aktiviert, kann der gewünschte Identifikationsaufforderungstext über ein mit dem Sprachspeicher 4 gekoppeltes Mikrofon 13 aufgenommen werden, wobei gleichzeitig in einem Display des Telefons 12 ein Zeitzähler sichtbar ist. Nach dem Loslassen der Aufnahmetaste 11 erfolgt eine automatische Wiedergabe des soeben aufgenommenen Identifikationsaufforderungstextes, so daß dieser kontrolliert werden kann. Eine Änderung des Identifkationsaufforderungstextes ist auf einfache Weise durch erneutes Drücken der Aufnahmetaste 11 möglich. Der Sprachspeicher 4 kann analog in Form eines Kassettenlaufwerks oder digital in Form eines D-Rams ausgeführt sein und ist, wie dargelegt, als reine Ansageeinrichtung ausgebildet.

Es ist ohne weiteres möglich, statt eines Sprachspeichers 4 mit variablem Identifikationsaufforderungstext einen Sprachspeicher 4 mit festem, d.h. unveränderlichem Identifikationsaufforderungstext vorzusehen. In diesem Fall sind Mikrofon und Aufnahmetaste nicht erforderlich.

Funktion und Ablauf der erfindungsgemäßen Schaltung können somit folgendermaßen zusammengefaßt werden:
1. Es wird ein Rufsignal gesendet;
2. Der Rufempfänger 1 detektiert den ankommenden Ruf und meldet dies der CPU 2;
3. Die CPU 2 aktiviert für eine vorbestimmte erste Zeitdauer die Melde- und Halteschaltung 3 (Schleife wird geschlossen);
4. Der im Sprachspeicher 4 gespeicherte Text wird auf die Telefonleitung La, Lb gegeben;
5. Bei Textende wird für eine vorbestimmte zweite Zeitdauer (Wartezeit) der Lautsprecher 7 eingeschaltet;
6A. Nach Ablauf der Wartezeit wird die Halteschaltung 3 abgeschaltet, und die Einrichtung öffnet die Schleife oder
6B. innerhalb der Wartezeit wird das Telefon 12 abgehoben. Die Schleifenstromerkennung 8 meldet dies der CPU 2, damit die Halteschaltung 3 deaktiviert wird, oder
6C. nach Ablauf der Wartezeit wird der Anrufbeantworter 9 eingeschaltet.

## Patentansprüche

1. Vorrichtung für die akustische Anruferkennung zur Zwischenschaltung zwischen Telefonapparat (12) und Teilnehmeranschlußleitung (La, Lb)
- mit einer Steuerschaltung (2) für die automatische Ablaufsteuerung sämtlicher Funktionen,
- einer Rufempfängerschaltung (1) zur Erkennung eines ankommenden Rufsignals,
- einer bei einem Anruf aktivierbaren Melde- und Halteschaltung (3) zur Aufrechterhaltung der Telefonverbindung für eine vorbestimmte erste Zeitdauer,
- einem Sprachspeicher (4), der aus einer eine Kurzinformation enthaltenden reinen Ansageeinrichtung besteht und während der ersten Zeitdauer über eine Sprachausgabe (5) die Kurzinformation auf die Teilnehmeranschlußleitung ausgibt,
- einer Mithörschaltung (6, 7), die einen Verstärker (6) sowie einen Lautsprecher (7) aufweist und während einer vorbestimmten zweiten Zeitdauer an die Teilnehmeranschlußleitung geschaltet ist,
- und einer Schleifenstromerkennungs-Schaltung (8), die bei Annahme des Anrufs, z.B. beim Abnehmen des Telefonhörers, während der zweiten Zeitdauer die Teilnehmeranschlußleitung zum Telefonapparat (12) durchschaltet und die Vorrichtung abschaltet,
- während bei Nichtannahme des Anrufs die Melde- und Halteschaltung (3) nach der zweiten Zeitdauer durch die Steuerschaltung (2) deaktiviert wird.

2. Vorrichtung nach Anspruch 1, dadurch gekennzeichnet, daß der Sprachspeicher (4) einen zweiten gespeicherten Text enthält, der nach Ablauf der vorbestimmten zweiten Zeitdauer mittels der Steuerschaltung (2) abrufbar ist.

3. Vorrichtung nach Anspruch 1 oder 2, dadurch gekennzeichnet, daß eine vorzugsweise in der Steuerschaltung (2) integrierte Schaltung (10) zum wahlweisen Ein- und Abschalten der Vorrichtung vorgesehen ist.

4. Vorrichtung nach einem der vorhergehenden Ansprüche, dadurch gekennzeichnet, daß eine vorzugsweise in der Steuerschaltung (2) integrierte Schaltung (11) zum Aufzeichnen des im Sprachspeicher (4) zu speichernden Textes vorgesehen ist.

5. Vorrichtung nach einem der vorhergehenden Ansprüche, dadurch gekennzeichnet, daß der Sprachspeicher (4) aus einem analogen Speichermedium, wie beispielsweise einem Kassettenlaufwerk, oder einem digitalen Speichermedium, wie beispielsweise einem D-Ram, besteht.

6. Vorrichtung nach einem der vorhergehenden Ansprüche, dadurch gekennzeichnet, daß sie innerhalb des Telefongehäuses angeordnet ist.

7. Vorrichtung nach einem der Ansprüche 1 - 5, dadurch gekennzeichnet, daß sie in einem vom Telefongehäuse getrennten Gehäuse untergebracht und mit dem Telefonapparat (12) über ein elektrisches Anschlußkabel oder eine Steckverbindung verbunden ist.
